# EUROPEAN PATENT APPLICATION

(11) **EP 2 682 585 A1**
(43) Date of publication of application: **08.01.2014**
(21) Application number: 12752897.4
(22) Date of filing: 20.02.2012
(51) Int. Cl.: F02C 6/04, F01D 9/02, F01D 9/06, F02C 7/00

(54) **GAS TURBINE**

(30) Priority: 02.03.2011 KR 20110018506
(71) Applicant: Kim, Ki Tae, Gyeonggi-do 448-160 (KR)
(72) Inventor: Kim, Ki Tae, Gyeonggi-do 448-160 (KR)
(74) Representative: Roos, Peter
(86) International application number: PCT/KR2012/001236
(87) International publication number: WO 2012/118288

(57) **Abstract**

The present invention relates to a gas turbine. According to the present invention, gas may be injected in the circumferential direction in order to rotate the turbine shaft using a repulsive force, thereby improving the efficiency of the conversion of rotational energy of the turbine and reducing manufacturing costs. Also, the flow resistance to the gas may be reduced, a pressure loss may be prevented, and energy loss may be reduced so as to manufacture an inexpensive turbine having high efficiency. In addition, when turbines having capacities different from each other are manufactured, parts may be easily shared with each other, and the eccentric rotation of the turbine shaft may be prevented to significantly improve durability. Also, an air compression part, a gas expansion part, and a power generation part may be modularized, and fuel and water may be supplied together. Thus, overheating of the gas expansion part may be prevented to prevent air from being excessively expanded, and vapor may be generated to improve a rotational force in addition to the thrust force of the turbine. Also, the gas turbine may be manufactured using a relatively inexpensive metal material instead of expensive high temperature ablative materials in order to reduce manufacturing costs.

## Description

### TECHNICAL FIELD

The present invention relates to a gas turbine that generates a rotational force using a high-pressure operating gas, such as a combustion gas or steam.

### BACKGROUND ART

In general, gas turbines obtain a rotational force by rotating a turbine disposed as a fan at a rear part of the gas turbine using an injection pressure of a discharged gas and rotates an air compressor disposed at a front part of the gas turbine using a shaft connected to the turbine, thereby supplying compressed air required to combust fuel and to propel a jet engine.

Generally, in jet engines, as the greater part of a thrust force of an airplane is used in a reaction caused by a high-temperature exhaust gas discharged from an engine, uncombusted and remaining air is discharged toward the turbine together with a combustion gas and thus is used to increase a flying velocity. A traditional example thereof is a fan-jet engine used in a large airliner. In the fan-jet engine, about 85% of combusted gas energy is not used as a rotational force but is used as kinetic energy (thrust force) of an exhaust gas.

On the other hand, a turbine used as an engine for power generation or a tank does not require the thrust force generated due to a spurting gas, and energy of an exhaust gas discharged from the engine is not used to generate a rotational force of the shaft but the greater part of energy goes to waste. For example, in a turbine for power generation, the thrust force caused by the exhaust gas is not required, and only the rotational force of the shaft is used. Also, when a turbine is used as an engine, such as a tank, the velocity of the tank is very lower than the velocity of the exhaust gas such that the thrust force of the tank is not generated due to the exhaust gas, and the greater part of energy of the exhaust gas wastes. Thus, when the turbine is used for power generation or as an engine, the amount of energy of the exhaust gas discharged may be reduced if possible, and rotational energy of the shaft may be increased.

However, in current gas turbines, it is impossible to convert the greater part of a high-temperature high-pressure gas spurting from a combustion chamber into a rotational force. Thus, a considerable amount of combustion gas is discharged in a high-temperature high-pressure gas state, and much energy wastes. Also, in such a gas turbine, the turbine must be manufactured using a high-quality and high ablative material that withstands a high-temperature gas generated in the combustion chamber. Thus, the gas turbine is a very expensive device. For your reference, a rear turbine 1200°C or more when the turbine operates.

However, in gas turbines according to the related art, blades of a turbine are surrounded by a housing of the turbine and thus a predetermined distance between ends of the blades and an inner circumferential surface of the housing of the turbine must be made in consideration of thermal expansion of the blades. Thus, as a pressure loss of the gas increases, the generation efficiency of the rotational force of the turbine is lowered.

In addition, in gas turbines according to the related art, generation of a force used to rotate the blades from an incident gas depends on the momentum transferred to the blades from the gas, and the momentum is determined by several factors, such as the number of the blades, an angle or an area of the incident gas. However, since the velocity and direction of a gas that collides with turbine blades are changed, in this consideration, it is very difficult to properly design the shape or angle of the turbine blades in a next row and to arrange several thousands of blades in such a way that the occurrence of turbulence is minimum. Thus, there is a limitation in manufacturing a turbine having high efficiency.

In addition, in gas turbines according to the related art, the rear turbine is configured in multiple stages, the temperature of the combustion gas is excessively high, the velocity of the discharged combustion gas increases excessively and the discharged combustion gas expands excessively, and the greater part of energy of the exhaust gas is generated as the thrust force in addition to the rotational force. Thus, energy of the exhaust gas wastes in other places than a place where the thrust force is used to propel the airplane, like in a jet airliner, and only a part of energy of the exhaust gas is converted into the rotational force. As a result, in the field where rotational force is required, like in a gas turbine for power generation, the thrust force is a waste of energy that is not conducive to generation of the rotational force.

### DETAILED DESCRIPTION OF THE INVENTION

### TECHNICAL PROBLEM

The present invention provides a gas turbine that is capable of improving thermal efficiency of a turbine for power generation by converting energy of an exhaust gas into rotational energy at a high rate if possible.

The present invention also provides a gas turbine that is capable of easily manufacturing a turbine having high efficiency by simplifying factors for determining the momentum caused by a gas.

The present invention also provides an innovative gas turbine that is capable of forming a turbine in multiple stages and reducing the temperature of a combustion gas so as to convert energy of an exhaust gas into a rotational force and that is capable of improving thermal efficiency of the gas turbine even though the temperature of the exhaust gas is remarkably reduced.

### TECHNICAL SOLUTION

According to an aspect of the present invention, there is provided a gas turbine including: a gas expansion part that expands gas; a power generation part that generates a rotational force due to the gas expanded by the gas expansion part and has a turbine shaft so as to transfer the rotational force; an air compression part that is combined with the turbine shaft of the power generation and rotates and compresses air so as to supply compressed air to the gas expansion part, wherein the power generation part generates the rotational force when a nozzle assembly having at least one injection hole so as to inject the gas in a circumferential direction is combined with the turbine shaft and the gas is injected in the circumferential direction via the at least one injection hole.

According to another aspect of the present invention, there is provided a gas turbine including: a casing in which an injection chamber having an inlet and an outlet is provided; a turbine shaft that penetrates the injection chamber of the casing and is rotatably combined with the casing; at least two nozzle assemblies that are combined with each other by a predetermined distance along an axial direction of the turbine shaft, are opened in a direction of an inlet of the casing and are closed in a direction of an outlet of the casing so as to have a housing, which is combined with the turbine shaft and in which at least one injection hole is formed through an outer circumferential surface of the housing and a gas injection pipe, which is combined with the at least one injection hole of the housing so as to communicate with each other and in which an open end is formed in a circumferential direction of the gas injection pipe; a gas expansion part that is installed within the casing and generates a combustion gas so as to supply the combustion gas to the at least two nozzle assemblies; and a guide that is combined with the casing so as to block a space between the at least two nozzle assemblies and guides the combustion gas injected from the gas injection pipe of a front nozzle assembly to the housing of a rear nozzle assembly.

### EFFECTS OF THE INVENTION

In a gas turbine according to the present invention, a gas is injected in a circumferential direction so as to rotate a turbine shaft using a repulsive force so that the efficiency of conversion of rotational energy of the turbine can be improved and manufacturing costs can be reduced.

In addition, a flow resistance to the gas can be reduced, a pressure loss can be prevented, and energy loss can be reduced so as to manufacture an inexpensive turbine having high efficiency.

In addition, when turbines having capacities different from each other are manufactured, parts can be easily shared with each other, and the eccentric rotation of the turbine shaft can prevented to significantly improve durability.

Furthermore, an air compression part, a gas expansion part, and a power generation part can be modularized, and fuel and water can be supplied together. Thus, overheating of the gas expansion part can be prevented to remarkably reduce the temperature of an outlet of the gas expansion part and to prevent air from being excessively expanded, and vapor can be generated to reduce the thrust force of an exhaust gas and to improve a rotational force.

### DESCRIPTION OF THE DRAWINGS

FIG. 1 is a perspective view illustrating an inside of a gas turbine according to an embodiment of the present invention;
FIG. 2 is a cross-sectional view illustrating the inside of the gas turbine illustrated in FIG. 1;
FIG. 3 is a cross-sectional view taken along line I-I of FIG. 2;
FIGS. 4 and 5 are perspective views illustrating other examples of a gas injection pipe illustrated in FIG. 1;
FIG. 6 is a cross-sectional view illustrating another example of an injection hole in which the gas injection pipe is excluded from the gas turbine of FIG. 1;
FIGS. 7 and 8 are schematic views illustrating examples of arrangement of a fuel injection device and a water injection device of the gas turbine of FIG. 1;
FIG. 9 is a cross-sectional view illustrating another example of a gas turbine according to another embodiment of the present invention;
FIG. 10 is a cross-sectional view illustrating a gas turbine according to another embodiment of the present invention; and
FIG. 11 is a plan view illustrating an injection hole of a nozzle assembly of the gas turbine illustrated in FIG. 10.

### MODE OF THE INVENTION

Hereinafter, a gas turbine according to the present invention will be described more fully based on an embodiment.

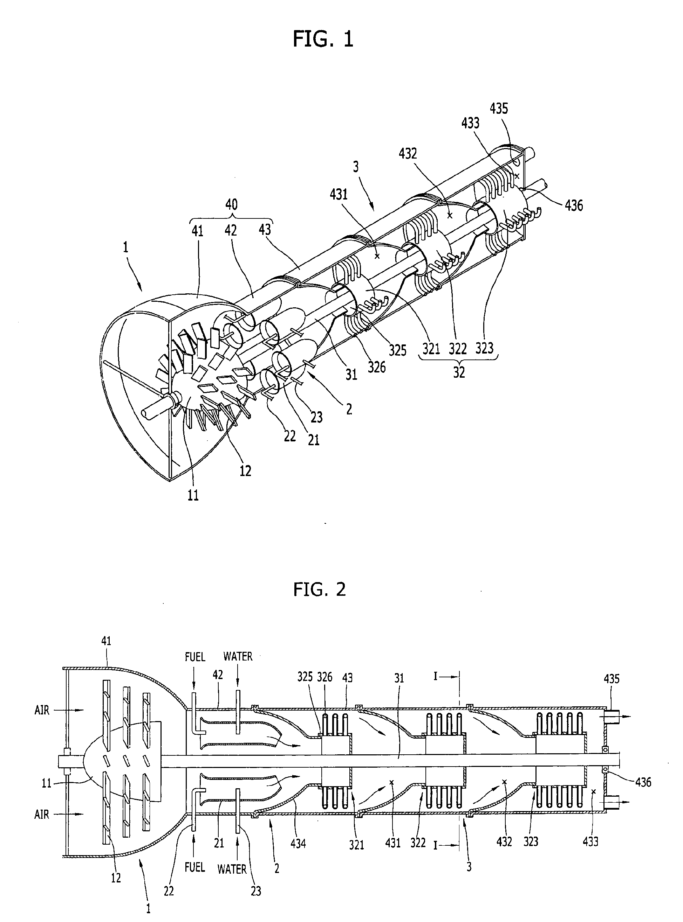

FIG. 1 is a perspective view illustrating an inside of a gas turbine according to an embodiment of the present invention, and FIG. 2 is a cross-sectional view illustrating the inside of the gas turbine illustrated in FIG. 1.

Referring to FIGS. 1 and 2, the gas turbine includes an air compression part 1 that compresses air, a gas expansion part 2 that expands air compressed by the air compression part 1 so as to improve a flow velocity of air, and a power generation part 3 that generates a rotational force when high-temperature high-pressure air expanded by the gas expansion part 2 is injected in a circumferential direction. The air compression part 1, the gas expansion part 2, and the power generation part 3 are sequentially installed at an inner side of a casing 40, and the air compression part 1 is configured to be combined with a turbine shaft 31 of the power generation part 2 and to rotate due to the rotational force generated by the power generation part 3.

The air compression part 1 includes a head 11 that is rotatably installed at an inner side of a compression casing 41 and a plurality of blades 12 that are installed at an outer circumferential surface of the head 11 and cause air to be compressed and to be ejected.

The head 11 has a narrow inlet side having a conical or dome shape and is combined integrally with the turbine shaft 31.

The gas expansion part 2 is installed at an inner side of a combustion casing 42 in such a way that compressed air absorbed through the air compression part 1 causes a fuel to be combusted and to be expanded. Although one combustion tub 21 having an annular shape may be disposed in the gas expansion part 2 so as to surround the turbine shaft 31, a plurality of combustion tubs 21 may be arranged around the turbine shaft 31 along the circumferential direction, like in the drawings.

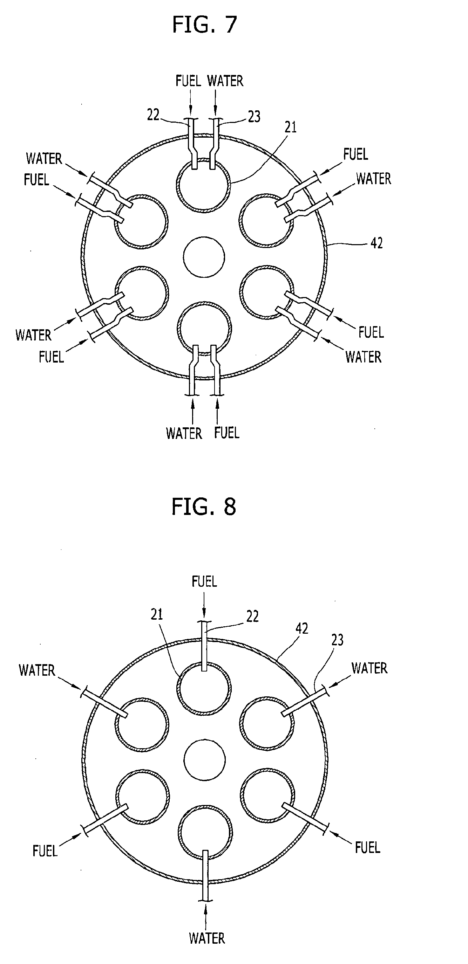

The plurality of combustion tubs 21 may be formed long so that their inlets are directed to the air compression part 1 and their outlets are directed to the power generation part 3. A fuel injection pipe 22 is installed at each of the combustion tubs 21 so as to inject a fuel, such as kerosene, propane, or a natural gas, into the combustion tub 21, and a water injection pipe 23 is installed at one side of the fuel injection pipe 22 so as to reduce the temperature of the gas by injecting water immediately after the combustion of the fuel. As a result, even though water is evaporated and is added to the gas and the temperature of the gas is lowered, the volume of the gas further increases. The fuel injection pipe 22 and the water injection pipe 23 may be installed together at each combustion tub 21, as illustrated in FIG. 7, or may be individually installed at each combustion tub 21. When the fuel injection pipe 22 and the water injection pipe 23 are individually installed at each combustion tub 21, the fuel injection pipe 22 and the water injection pipe 23 may be alternately installed along the combustion tub 21.

A valve (not shown) is installed at the middle of the fuel injection pipe 22 and the water injection pipe 23 so as to automatically or manually adjust a supply period or a supply amount of fuel and water supplied to the combustion tub 21 according to condition.

The power generation part 3 includes a turbine shaft 31 that penetrates the inner side of the casing 40 from an inlet to an outlet of the casing 40 and that is rotatably combined with the casing 40 and a plurality of nozzle assemblies (hereinafter, are classified into first, second, and third nozzle assemblies from a front to a rear) 321, 322, and 323 that are combined with the turbine shaft 31 along an axial direction of the turbine shaft 31 and inject the gas from an inner side of a power casing 43 so as to rotate the turbine shaft 31, as illustrated in FIGS. 1 and 2.

An internal space of the power casing 43 is partitioned off into a plurality of injection chambers (hereinafter, are classified into first, second, and third injection chambers from the front to the rear) 431, 432, and 433 by a guide 434 disposed between the nozzle assemblies 321, 322, and 323. Here, the power casing 43 may be configured in a cylindrical form, and the guide 434 may be configured in a funnel form in which a cross-sectional area of the guide 434 decreases toward the rear.

The volume of each of the injection chambers 431, 432, and 433 may be the same or may be increased in a direction of an outlet of each of the injection chambers 431, 432, and 433 considering that the gas is expanded as it gets closer to the direction of the outlet of each of the injection chambers 431, 432, and 433. At least one exhaust port 435 may be formed in a rear side of the power casing 43, and a bearing 436 may be installed at the center of a surface of the power casing 43 in which the exhaust port 435 is formed, so as to penetrate and support the turbine shaft 31.

The nozzle assembly 32 includes a housing 325 that is combined integrally with an outer circumferential surface of the turbine shaft 31, and a plurality of gas injection pipes 326 that are combined with an outer circumferential surface of the housing 325 and inject the gas in the circumferential direction, i.e., in a direction opposite to a rotation direction of the turbine shaft 31.

A front side of the housing 325 toward the nozzle assembly 32 is opened, while a rear side of the housing 325 toward the nozzle assembly 32 has a closed, cylindrical shape, and the closed side of the housing 325 is combined integrally with the turbine shaft 31. At least one injection hole 327 is formed in the outer circumferential surface of the housing 325. A plurality of injection holes 327 may be formed in a straight line along the axial direction of the turbine shaft 31, as illustrated in FIGS. 1 and 2, and the plurality of injection holes 327 may be formed at uniform intervals along the circumferential direction.

A diameter of an open end of the housing 325 is greater than a diameter of the turbine shaft 31 such that the gas flows between the outer circumferential surface of the turbine shaft 31 and the open end of the housing 325 and flows into the nozzle assembly 32. An outlet end of the front side guide 434 may be inserted into and combined with the open end of the housing 325 so as to prevent the gas from flowing directly into a rear injection chamber. In this case, a sealing member may be provided between the open end of the housing 325 and the outlet end of the guide 434.

Although the injection holes 327 may be formed by the same number and the same size for each of the nozzle assemblies 321, 322, and 323, since the gas is expanded while passing through each of the nozzle assemblies 321, 322, and 323, in this consideration, the entire cross-sectional area of the injection hole 327 or the number of injection holes 327 may be increased as it gets closer to the rear side such that rotational forces generated in the nozzle assemblies 321, 322, and 323 can be the same.

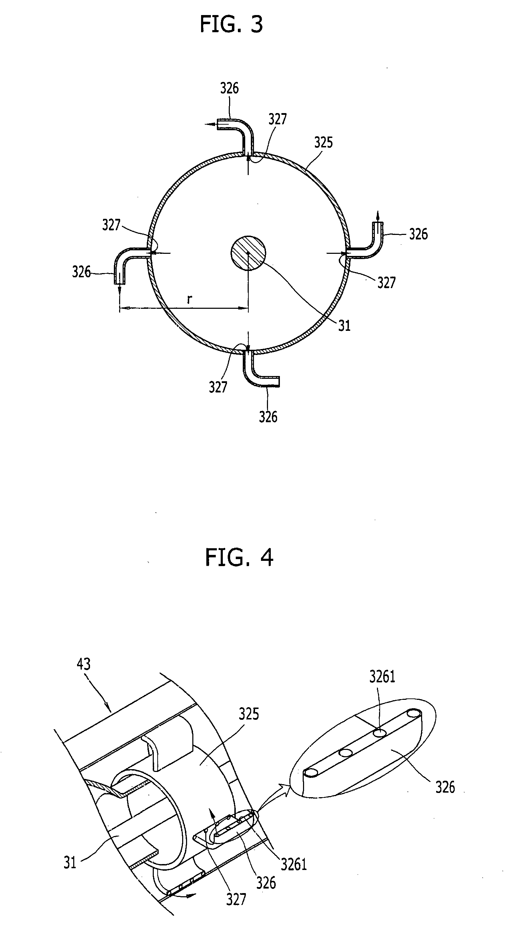

Referring to FIG. 3, an outlet end of each gas injection pipe 326 may be formed in a tangential direction of each of the nozzle assemblies 321, 322, and 323, i.e., in a direction opposite to a rotation direction of the turbine shaft 31. To this end, each gas injection pipe 326 is formed in a bent form, as illustrated in FIG. 3. Although not shown, each gas injection pipe 326 may be formed in a straight line. Obviously, no gas injection pipe 326 may be provided, and the injection holes 327 may be inclined in a radial direction so that the nozzle assembly 32 can be rotated only through the injection holes 327 of the housing 325.

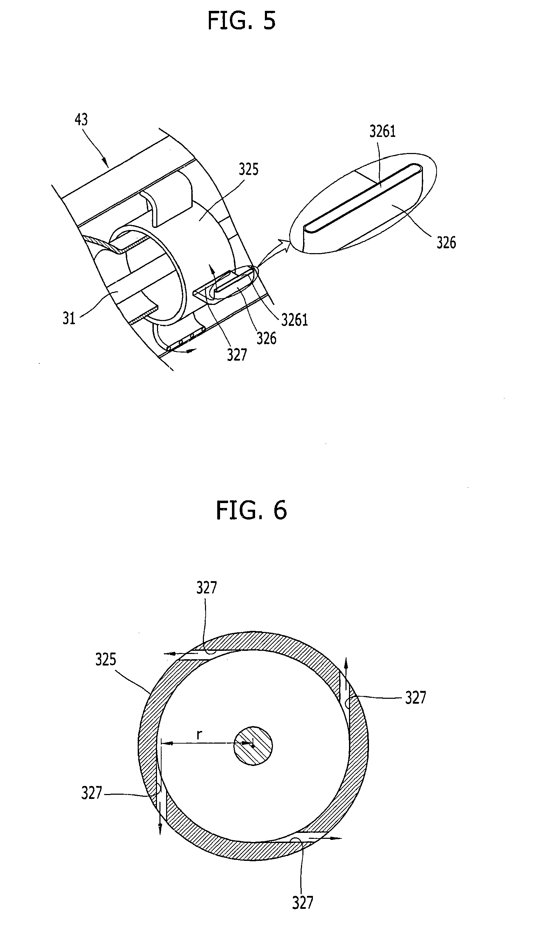

The gas injection pipe 326 may be configured in such a way that a vertical distance r from an axial center of the turbine shaft 31 to an outlet of the gas injection pipe 326 is gradually decreased as it gets closer to a downstream injection chamber. The gas injection pipes 326 may be configured in a circular pipe form and may be individually combined with the injection holes 327, as illustrated in FIGS. 1 through 3. However, as illustrated in FIG. 4, a plurality of injection through holes 3261 may be formed in one gas injection pipe 326 so as to communicate with the injection holes 327. Also, as illustrated in FIG. 5, the injection holes 327 may be formed long in the axial direction of the turbine shaft 31 in a long hole form, and long hole-shaped injection through holes 3261 may be formed on one gas injection pipe 326 so as to communicate with the long hole-shaped injection holes 327.

The gas turbine having the above configuration according to the present invention operates as follows.

Air compressed by the air compression part 1 flows in the combustion tub 21 of the gas expansion part 2, and simultaneously, the fuel is injected into an internal space of the combustion tub 21 through the fuel injection pipe 22 so that the fuel can be combusted in the combustion tub 21. Then, air is expanded by combustion heat generated in the combustion tub 21 and moves to the power generation part 3 at a high speed.

A process in which the high-temperature high-pressure gas flows in the first nozzle assembly 321 and is injected into the first injection chamber 431 and the gas flows in the second nozzle assembly 322 and is injected into the second injection chamber 432, is continuously performed so that the gas can be discharged to the outside via the exhaust port 435.

The gas turbine may further improve rotation efficiency of the shaft compared to an impeller type turbine (or a momentum transfer type turbine) according to the related art. The impeller type turbine according to the related art requires many top-level human resources and a high degree of precision when designing, manufacturing or assembling several hundreds or thousands of impellers, whereas the degree of precision of the gas turbine required for parts design or manufacturing and assembling is much lower than that of the impeller type turbine according to the related art, and the number of parts of the gas turbine is remarkably reduced so that a turbine having high efficiency, in which a rotational force of the turbine is drastically increased, can be manufactured with a considerably low price compared to the current impeller type turbine.

In the gas turbine, the momentum of the gas is transferred to an injection hole (i.e., the relative velocity of the gas with respect to the turbine is zero). Thus, the momentum of the gas is zero and theoretical energy transfer efficiency is 100%, which cannot be theoretically achieved in the impeller type turbine according to the related art.

In the impeller type turbine according to the related art, although a path of the gas incident from a boiler is uniform, once the gas collides with one impeller, the velocity and direction of the gas are changed, and a part of the gas is reflected in a backward direction of the impeller in a front line due to a reaction caused by collision with the impeller, and the turbine may be decelerated due to a difference between the rotation velocity and direction of the impeller and the direction and velocity of the reflected gas. These problems can be reduced through design but cannot be completely solved. Thus, actual energy conversion efficiency cannot be prevented from being slightly lowered. Contrary to this, in the gas turbine, nozzle assemblies are sequentially disposed, and a gas injection pipe is provided instead of an impeller so that lowered energy conversion efficiency can be remarkably improved.

In the gas turbine, as the gas is injected from the gas injection pipe of the nozzle assembly in the same circumferential direction, the turbine shaft rotates at a high speed due to a repulsive force of the injected gas. However, the temperature of the gas expansion part 2 is excessively increased to 1200°C or more so that air in the gas expansion part 2 is excessively expanded and the injection velocity of the gas is drastically increased. This is because, except for a small gas turbine, the nozzle assembly may be damaged without withstanding a centrifugal force generated by high speed rotation. In this consideration, if the supply amount of fuel or the supply amount of air is arbitrarily reduced not to rotate the nozzle assembly at a high speed, the efficiency of the turbine may be remarkably lowered.

Thus, in the present embodiment, the water injection pipe 23 in addition to the fuel injection pipe 22 communicates with the combustion tub 21 so that water is injected into the combustion tub 21 immediately after a combustion process, so that the temperature of the gas expansion part 2 can be reduced to about 200°C to 300°C so as to adjust the injection velocity of the gas to approximately a tangential velocity and simultaneously the volume of a gas caused by evaporation and expansion of water is increased so as to mix a high-pressure vapor in the gas, thereby obtaining a high rotational force. Thus, energy conversion efficiency of the turbine can be improved, and an alloy of metal that is usually used can be used instead of a high-temperature ablative material so that manufacturing costs of the turbine can be reduced and a material used in manufacturing the turbine can be easily selected.

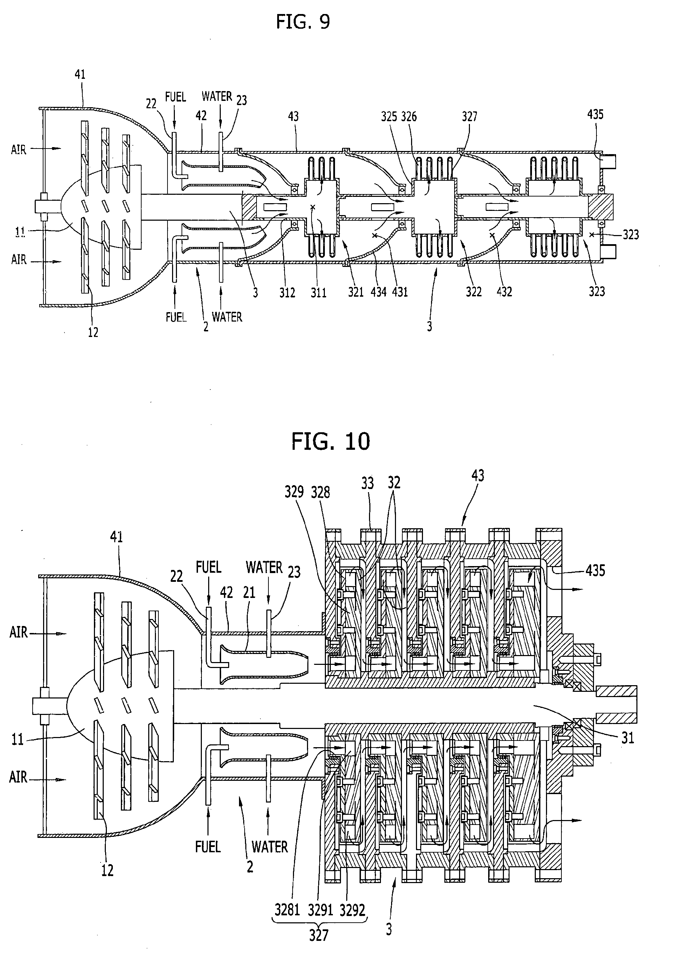

In the above-described embodiment, the gas expanded by the gas expansion part 2 flows in the rear nozzle assembly 32 via a space between the outer circumferential surface of the turbine shaft 31 and the inner circumferential surface of the housing 325. However, in the present embodiment, the gas expanded by the gas expansion part 2 may flow in the rear nozzle assembly 32 via an inside of the turbine shaft 31. For example, as illustrated in FIG. 9, the turbine shaft 31 is formed in the form of a hollow 311, and a through hole 312 is formed in an outer circumferential surface of the turbine shaft 31 so that the hollow 311 and each of the injection chambers 431, 432, and 433 communicate with each other through the through hole 312. A plurality of turbine shafts 31 may be combined with each other so as to be connected to each other, and a space between the turbine shafts 31 may be combined with each other so that the hollow 311 and the nozzle assembly 32 communicate with each other. Thus, a process in which the gas discharged from the gas expansion part 2 flows in the hollow 311 of the turbine shaft 31 via the through hole 312 and the gas is injected into each injection chamber via the rear nozzle assembly 32, is sequentially performed so that a rotational force can be generated. Basic configuration and effects of the gas turbine according to the present embodiment are substantially the same as those of the above-described embodiment. However, in the present embodiment, as the gas flows in the rear nozzle assembly 32 while passing through the inside of the turbine shaft 31, gas leakage between injection chambers can be prevented.

A power generation part of a gas turbine according to another embodiment of the present invention will now be described.

That is, in the above-described embodiment, a plurality of nozzle assemblies 32 are installed at a predetermined distance along the axial direction of the turbine shaft 31. However, in the present embodiment, the plurality of nozzle assemblies 32 are continuously stacked along the axial direction of the turbine shaft 31.

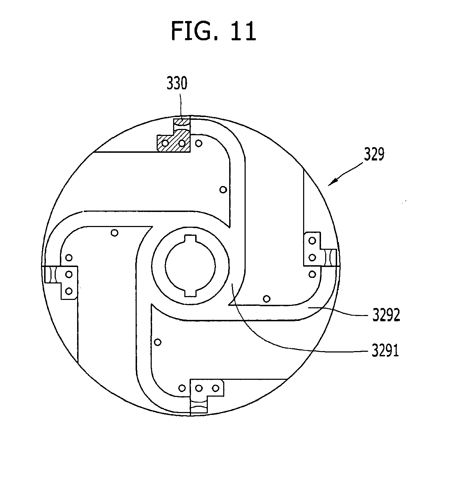

As illustrated in FIGS. 10 and 11, the gas turbine according to the present embodiment includes an air compression part 1 that compresses air, a gas expansion part 2 that expands air compressed by the air compression pat 1 so as to increase a flow velocity of air, and a power generation part 3 that generates a rotational force when high-temperature high-pressure air expanded by the gas expansion part 2 is injected in a circumferential direction. The air compression part 1, the gas expansion part 2, and the power generation part 3 are sequentially installed at an inner side of a power casing 43, and the air compression part 1 is configured to be combined with a turbine shaft 31 of the power generation part 3 and to be rotated due to the rotational force generated by the power generation part 3.

The air compression part 1 and the gas expansion part 2 are almost similar to those of the above-described embodiment and thus detailed descriptions thereof will be omitted. However, in the power generation part 3 according to the present embodiment, the turbine shaft 31 is rotatably combined with the power casing 43, and at least one nozzle assembly 32 having injection holes 327 through which the flowing gas is expanded by the gas expansion part 2 and the turbine shaft 31 is rotated, is continuously stacked at an inner side of the power casing 43 along the axial direction of the turbine shaft 31 in a state in which a separation plate 33 is interposed between the nozzle assemblies 32.

The nozzle assembly 32 includes a nozzle cover 328, which has a disc shape and in which an injection intake port 3281 is formed at a periphery of an axial hole so as to form an inlet of the injection hole 327, and a nozzle plate 329, which is combined with one side of the nozzle cover 328 and in which an injection communication port 3291 and an injection ejection port 3292 are continuously formed so as to communicate with the injection intake port 3281.

The capacity of the turbine may vary depending on the number of nozzle assemblies 32 that are combined with the turbine shaft 31. That is, when the capacity of the turbine is small, the number of nozzle assemblies 32 may be small, and when the capacity of the turbine is large, the number of nozzle assemblies 32 may be large.

When there are a plurality of nozzle assemblies 32, considering that the gas is expanded as it gets closer to the rear side, the entire cross-sectional area of the injection hole 327 of the nozzle assembly 32 or the number of injection holes 327 of the nozzle assembly 32 may be increased as it gets closer to the rear side.

When the number of injection holes 327 is plural, the injection holes 327 may have the same shape at uniform intervals so that the eccentric load of the turbine shaft 31 can be reduced so as to improve the performance of the turbine. Unexplained reference numeral 330 is a nozzle block.

The configuration and effects of the gas turbine according to the present embodiment described above are substantially the same as those of the above-described embodiment. However, in the present embodiment, as a gas injection pipe is excluded and the injection hole is formed in the nozzle assembly, unbalance of weight that occurs when the gas injection pipe is welded to a housing, like in the above-described embodiments, can be prevented so that vibration of the turbine or lowered performance of the turbine caused by an eccentric load when the nozzle assembly is rotated at a high speed can be prevented.

In addition, the capacity of the turbine can be adjusted according to the number of unit turbines including the nozzle assembly so that turbines having capacities different from each other can be easily manufactured, parts for manufacturing turbines having different capacities can be easily shared with each other and manufacturing costs can be reduced.

While the present invention has been particularly shown and described with reference to exemplary embodiments thereof, it will be understood by those of ordinary skill in the art that various changes in form and details may be made therein without departing from the spirit and scope of the present invention as defined by the following claims.

### INDUSTRICAL APPLICABILITY

By using a gas turbine according to the present invention, the gas turbine that is capable of improving rotation energy conversion efficiency and reducing manufacturing costs, can be manufactured.

## Claims

1. A gas turbine comprising:
a gas expansion part that expands gas;
a power generation part that generates a rotational force due to the gas expanded by the gas expansion part and has a turbine shaft so as to transfer the rotational force;
an air compression part that is combined with the turbine shaft of the power generation and rotates and compresses air so as to supply compressed air to the gas expansion part,
wherein the power generation part generates the rotational force when a nozzle assembly having at least one injection hole so as to inject the gas in a circumferential direction is combined with the turbine shaft and the gas is injected in the circumferential direction via the at least one injection hole.

2. The gas turbine of claim 1, wherein a plurality of nozzle assemblies are provided to communicate with each other, and the plurality of nozzle assemblies are disposed at a predetermined distance along an axial direction of the turbine shaft so that the gas is able to sequentially flow along the axial direction of the turbine shaft.

3. The gas turbine of claim 2, wherein each of the plurality of nozzle assemblies comprises:
a housing that is combined integrally with the turbine shaft, has an open end through which the gas flows in and has at least one injection hole formed in an outer circumferential surface of the housing; and
at least one gas injection pipe that is combined with the outer circumferential surface of the housing so as to communicate with the at least one injection hole.

4. The gas turbine of claim 3, further comprising a guide that is disposed between the nozzle assemblies and guides the gas injected from a front nozzle assembly to a rear nozzle assembly.

5. The gas turbine of claim 4, wherein at least a part of the housing and at least a part of the guide overlap each other.

6. The gas turbine of claim 2, wherein a plurality of nozzle assemblies are disposed, and each of the plurality of nozzle assemblies has at least one injection hole formed therein, and the plurality of nozzle assemblies are continuously stacked along the axial direction of the turbine shaft.

7. The gas turbine of claim 6, wherein two or more plates overlap each other so that the nozzle assemblies are able to be formed.

8. The gas turbine of claim 6, wherein one nozzle assembly is combined by overlapping two plates each other, and the injection hole is formed between both plates that overlap each other.

9. The gas turbine of claim 2, wherein an entire cross-sectional area of the injection hole of the rear nozzle assembly is greater than an entire cross-sectional area of the injection hole of the front nozzle assembly.

10. The gas turbine of claim 2, wherein the number of injection holes of the rear nozzle assembly is greater than the number of injection holes of the front nozzle assembly.

11. The gas turbine of claim 1, wherein the gas expansion part comprises a fuel injection device that injects a fuel for combustion and a water injection device that injects water for evaporation.

12. The gas turbine of claim 11, wherein a plurality of combustion tubs are arranged in a circumferential direction of the gas expansion part, and the fuel injection device and the water injection device are individually provided at each of the plurality of combustion tubs.

13. The gas turbine of claim 11, wherein a plurality of combustion tubs are arranged in a circumferential direction of the gas expansion part, and the fuel injection device and the water injection device are provided together at each of the plurality of combustion tubs.

14. The gas turbine of claim 1, wherein the turbine shaft is formed in a form of a hollow, and a through hole is formed in the turbine shaft so that the gas is able to be guide to the nozzle assembly via the hollow.

15. The gas turbine of claim 1, wherein the nozzle assembly is combined integrally with the turbine shaft.

16. A gas turbine comprising:
a casing in which an injection chamber having an inlet and an outlet is provided;
a turbine shaft that penetrates the injection chamber of the casing and is rotatably combined with the casing;
at least two nozzle assemblies that are combined with each other by a predetermined distance along an axial direction of the turbine shaft, are opened in a direction of an inlet of the casing and are closed in a direction of an outlet of the casing so as to have a housing, which is combined with the turbine shaft and in which at least one injection hole is formed through an outer circumferential surface of the housing and a gas injection pipe, which is combined with the at least one injection hole of the housing so as to communicate with each other and in which an open end is formed in a circumferential direction of the gas injection pipe;
a gas expansion part that is installed within the casing and generates a combustion gas so as to supply the combustion gas to the at least two nozzle assemblies; and
a guide that is combined with the casing so as to block a space between the at least two nozzle assemblies and guides the combustion gas injected from the gas injection pipe of a front nozzle assembly to the housing of a rear nozzle assembly.

17. The gas turbine of claim 16, wherein the gas expansion part comprises at least one combustion tub that is disposed at an inlet of the casing and combusts a fuel so as to generate the combustion gas.

18. The gas turbine of claim 17, wherein a fuel injection device that injects the fuel is installed at the at least one combustion tub, and a water injection device that injects water into the at least one combustion tub is installed at one side of the fuel injection device.

19. The gas turbine of claim 17, wherein an air compressor is installed at the inlet of the casing so as to supply compressed air to the at least one combustion tub, and the air compressor is combined with the turbine shaft, rotates and compresses air.
